# EUROPEAN PATENT APPLICATION

(11) **EP 4 618 475 A1**
(43) Date of publication of application: **17.09.2025**
(21) Application number: 23899605.2
(22) Date of filing: 20.10.2023
(51) Int. Cl.: H04L 9/40

(54) **TRAFFIC FILTERING METHOD AND APPARATUS, AND DEVICE, SYSTEM AND STORAGE MEDIUM**

(30) Priority: 05.12.2022 CN 202211551930; 28.02.2023 CN 202310179506
(71) Applicant: Huawei Cloud Computing Technologies Co., Ltd., Guiyang, Guizhou 550025 (CN)
(72) Inventor: LI, Hui, Guiyang, Guizhou 550025 (CN)
(74) Representative: Pfenning, Meinig & Partner mbB
(86) International application number: PCT/CN2023/125634
(87) International publication number: WO 2024/120024

(57) **Abstract**

A traffic filtering method and apparatus, a device, a system, and a storage medium are disclosed, and relate to the field of communication technologies. A network edge node that provides a cloud service receives target traffic; obtains a filtering rule, where the filtering rule is used to filter, based on a filtering action, target traffic that meets a filtering condition; invokes a rule engine to parse and execute the filtering rule, where the rule engine is deployed in the network edge node or in a network edge processing system connected to the network edge node; and obtains filtered target traffic based on an execution result, where the filtered target traffic is traffic that meets a filtering requirement corresponding to the filtering rule. The target traffic filtered according to the filtering rule includes at least one of traffic sent by a network side to a user terminal and traffic sent by the user terminal to the network side, so that the method can meet a filtering requirement of a refined service, and elastic expansion of the filtering rule can be implemented using the rule engine, so that the method can be flexibly applied to various traffic filtering scenarios.

## Description

This application claims priorities to Chinese Patent Application No. 202211551930.7, filed on December 5, 2022 and entitled "TRAFFIC FILTERING METHOD AND APPARATUS, DEVICE, AND STORAGE MEDIUM", and to Chinese Patent Application No. 202310179506.2, filed on February 28, 2023 and entitled "TRAFFIC FILTERING METHOD AND APPARATUS, DEVICE, SYSTEM, AND STORAGE MEDIUM", both of which are incorporated herein by reference in their entireties.

### TECHNICAL FIELD

This application relates to the field of communication technologies, and in particular, to a traffic filtering method and apparatus, a device, a system, and a storage medium.

### BACKGROUND

With refined development of services and networks, a requirement for secure traffic filtering becomes increasingly complex. For example, network-layer abnormal traffic needs to be filtered out at a network edge, to avoid impact of the network-layer abnormal traffic on a service device on a user side. In addition, application-layer abnormal traffic needs to be filtered out at the network edge, to avoid impact of the application-layer abnormal traffic on an infrastructure in a network and a downstream service server.

### SUMMARY

This application provides a traffic filtering method and apparatus, a device, a system, and a storage medium, to filter transmitted target traffic.

According to a first aspect, a traffic filtering method is provided. An example in which a network edge node that provides a cloud service performs the method is used. The network edge node receives target traffic, where the target traffic includes at least one of traffic sent by a network side to a user terminal or traffic sent by the user terminal to the network side; obtains a filtering rule, where the filtering rule includes a filtering condition and a filtering action, and the filtering rule is used to filter, based on the filtering action, target traffic that meets the filtering condition; invokes a rule engine to parse and execute the filtering rule; and obtains filtered target traffic based on an execution result, where the filtered target traffic is traffic that meets a filtering requirement corresponding to the filtering rule. The rule engine is deployed in the network edge node, or the rule engine is deployed in a network edge processing system connected to the network edge node, and the network edge processing system is a network edge processing system that provides a cloud service.

The filtering rule in the method can not only be used to filter the traffic sent by the network side to the user terminal, but also be used to filter the traffic sent by the user terminal to the network side, so that the method can meet a filtering requirement of a refined service, and can be flexibly applied to various traffic filtering scenarios. The rule engine supports an elastic rule scaling mechanism, so that the rule engine can parse and execute the received filtering rule. The rule engine may be flexibly deployed in a form of software or a chip. If the rule engine is deployed in the network edge node, execution of the filtering rule can be simple. If the rule engine is deployed outside the network edge node, a requirement on a computing capability of the network edge node can be reduced. Therefore, the traffic filtering method is more flexibly implemented, and is applicable to different types of network edge nodes.

In a possible implementation, an expression of the filtering condition includes at least one of a logical operation, a relational operation, a bitwise operation, an arithmetic operation, a feature matching operation, an operator precedence, a behavior description, or an object reference. This provides richer conditional operations and conditional objects, so that the filtering rule can support more diverse filtering conditions, and therefore can support more diverse service traffic filtering scenarios.

In a possible implementation, the filtering action includes at least one of dropping, rate limiting, traffic limiting, blocklist filtering, trustlist filtering, redirection, or customization. This provides richer filtering actions, so that the filtering rule can support more diverse service traffic filtering scenarios.

In a possible implementation, the filtering rule further includes a data source, the data source includes at least one of a data packet or a shared resource, the data packet is used to specify an application scope of the filtering rule, and the shared resource is used to provide data support for the filtering condition or the filtering action of the filtering rule. The shared resource can be used to further extend the filtering condition or the filtering action.

In a possible implementation, the filtering rule further includes a scheduling policy for executing the filtering rule. For example, if the scheduling policy includes a time range and a periodicity, the filtering rule is executed in a time range in each periodicity. Flexible setting of the scheduling policy enables execution of the filtering rule to be more accurate.

In a possible implementation, a manner of obtaining the filtering rule may be: analyzing target traffic transmitted by the network edge node, and obtaining the filtering rule based on an analysis result. In this case, the network edge node can analyze target traffic that is historically transmitted and target traffic that is being transmitted by the network edge node, construct a traffic model based on an analysis result, convert the traffic model into a corresponding filtering rule, and then obtain the filtering rule. The filtering rule obtained by analyzing the target traffic is then applied to filtering of the target traffic, so that accuracy of the obtained filtering rule is improved.

In a possible implementation, a manner of obtaining a filtering rule may be: receiving the filtering rule issued by a service analysis component, where the filtering rule is obtained by the service analysis component by analyzing target traffic transmitted by a network edge node in a network. In this case, the service analysis component is deployed outside the network edge node, and the filtering rule is obtained by collecting and analyzing target traffic transmitted by each network edge node in the network. The filtering rule obtained through global analysis is more representative and better meets a service filtering requirement.

In a possible implementation, the service analysis component may invoke a network controller to send a border gateway protocol (border gateway protocol, BGP) update message to a route reflector (route reflector, RR), where the BGP update message includes network layer reachability information (network layer reachability information, NLRI), and the NLRI indicates the filtering rule; and then the route reflector reflects the BGP update message to the network edge node in the network. In this way, the network edge node can receive the BGP update message reflected by the route reflector, and obtain the filtering rule based on the received BGP update message. Therefore, through expansion of the NLRI, the BGP update message can carry the filtering rule, and fast propagation of the filtering rule is implemented through the route reflector.

According to a second aspect, a traffic filtering method is provided. An example in which a service analysis component that provides a cloud service performs the method is used. The service analysis component analyzes traffic transmitted by a network edge node in a network, and obtains a filtering rule based on an analysis result, where the filtering rule includes a filtering condition and a filtering action, the filtering rule is used to filter, based on the filtering action, target traffic that meets the filtering condition, and the target traffic includes at least one of traffic sent by a network side to a user terminal or traffic sent by the user terminal to the network side; and issues the filtering rule to the network edge node, where the filtering rule is used by the network edge node to invoke a rule engine to parse and execute the filtering rule, and the rule engine is deployed in the network edge node, or the rule engine is deployed in a network edge processing system connected to the network edge node. The network edge node is a network edge node that provides a cloud service.

In the method, the filtering rule is obtained by analyzing the transmitted traffic, so that the obtained filtering rule can not only be used to filter the traffic sent by the network side to the user terminal, but also be used to filter the traffic sent by the user terminal to the network side, and the obtained filtering rule can be issued to the network edge node in time for filtering. Therefore, the method can meet a filtering requirement of a refined service, and can be flexibly applied to various traffic filtering scenarios.

In a possible implementation, an expression of the filtering condition includes at least one of a logical operation, a relational operation, a bitwise operation, an arithmetic operation, a feature matching operation, an operator precedence, a behavior description, or a reference object.

In a possible implementation, the filtering action includes at least one of dropping, rate limiting, traffic limiting, blocklist filtering, trustlist filtering, redirection, or customization.

In a possible implementation, the filtering rule further includes a data source, the data source includes at least one of a data packet or a shared resource, the data packet is used to specify an application scope of the filtering rule, and the shared resource is used to provide data support for the filtering condition or the filtering action of the filtering rule.

In a possible implementation, the filtering rule further includes a scheduling policy for executing the filtering rule.

In a possible implementation, a manner of issuing the filtering rule to the network edge node may be: invoking a network controller to send a BGP update message to a route reflector, so that the route reflector reflects the BGP update message to the network edge node, where the BGP update message includes NLRI, and the NLRI includes the filtering rule.

In a possible implementation, after the filtering rule is issued to the network edge node, an execution result of executing the filtering rule by the network edge node may be further obtained. If the execution result does not meet a filtering requirement corresponding to the filtering rule, the filtering rule is adjusted, and an adjusted filtering rule is issued to the network edge node. The adjusted filtering rule is used by the network edge node to invoke the rule engine to parse and execute the adjusted filtering rule, to filter traffic according to the adjusted filtering rule. Therefore, an execution status of the filtering rule can be sensed in real time, and the filtering rule being executed can be adjusted in time, to improve filtering effect of the traffic filtering method.

According to a third aspect, a traffic filtering apparatus is provided. The apparatus is used for a network edge node that provides a cloud service, and the apparatus includes:
a receiving module, configured to receive target traffic, where the target traffic includes at least one of traffic sent by a network side to a user terminal or traffic sent by the user terminal to the network side;
a first obtaining module, configured to obtain a filtering rule, where the filtering rule includes a filtering condition and a filtering action, the filtering rule is used to filter, based on the filtering action, target traffic that meets the filtering condition, and the target traffic includes at least one of traffic sent by the network side to the user terminal or traffic sent by the user terminal to the network side;
a filtering module, configured to invoke a rule engine to parse and execute the filtering rule, where the rule engine is deployed in the network edge node, or the rule engine is deployed in a network edge processing system connected to the network edge node, and the network edge processing system is a network edge processing system that provides a cloud service; and
a second obtaining module, configured to obtain filtered target traffic based on an execution result, where the filtered target traffic is traffic that meets a filtering requirement corresponding to the filtering rule.

In a possible implementation, an expression of the filtering condition includes at least one of a logical operation, a relational operation, a bitwise operation, an arithmetic operation, a feature matching operation, an operator precedence, a behavior description, or an object reference.

In a possible implementation, the filtering action includes at least one of dropping, rate limiting, traffic limiting, blocklist filtering, trustlist filtering, redirection, or customization.

In a possible implementation, the filtering rule further includes a data source, the data source includes at least one of a data packet or a shared resource, the data packet is used to specify an application scope of the filtering rule, and the shared resource is used to provide data support for the filtering condition or the filtering action of the filtering rule.

In a possible implementation, the filtering rule further includes a scheduling policy for executing the filtering rule.

In a possible implementation, the obtaining module is configured to: analyze target traffic transmitted by the network edge node, and obtain the filtering rule based on an analysis result.

In a possible implementation, the obtaining module is configured to receive the filtering rule issued by a service analysis component, where the filtering rule is obtained by the service analysis component by analyzing target traffic transmitted by a network edge node in a network.

In a possible implementation, the obtaining module is configured to receive a BGP update message reflected by a route reflector, where the BGP update message includes NLRI, the NLRI indicates the filtering rule, and the BGP update message is sent by the service analysis component to the route reflector by invoking a network controller.

According to a fourth aspect, a traffic filtering apparatus is provided. The apparatus is used for a service analysis component that provides a cloud service, and the apparatus includes:
an obtaining module, configured to: analyze traffic transmitted by a network edge node in a network, and obtain a filtering rule based on an analysis result, where the filtering rule includes a filtering condition and a filtering action, the filtering rule is used to filter, based on the filtering action, target traffic that meets the filtering condition, the target traffic includes at least one of traffic sent by a network side to a user terminal or traffic sent by the user terminal to the network side, and the network edge node is a network edge node that provides a cloud service; and
a sending module, configured to issue the filtering rule to the network edge node, where the filtering rule is used by the network edge node to invoke a rule engine to parse and execute the filtering rule, and the rule engine is deployed in the network edge node, or the rule engine is deployed in a network edge processing system connected to the network edge node.

In a possible implementation, an expression of the filtering condition includes at least one of a logical operation, a relational operation, a bitwise operation, an arithmetic operation, a feature matching operation, an operator precedence, a behavior description, or a reference object.

In a possible implementation, the filtering action includes at least one of dropping, rate limiting, traffic limiting, blocklist filtering, trustlist filtering, redirection, or customization.

In a possible implementation, the filtering rule further includes a data source, the data source includes at least one of a data packet or a shared resource, the data packet is used to specify an application scope of the filtering rule, and the shared resource is used to provide data support for the filtering condition or the filtering action of the filtering rule.

In a possible implementation, the filtering rule further includes a scheduling policy for executing the filtering rule.

In a possible implementation, the sending module is configured to invoke a network controller to send a BGP update message to a route reflector, so that the route reflector reflects the BGP update message to the network edge node, where the BGP update message includes NLRI, and the NLRI indicates the filtering rule.

In a possible implementation, the obtaining module is further configured to obtain an execution result of executing the filtering rule by the network edge node.

The apparatus further includes an adjustment module, configured to: if the execution result does not meet a filtering requirement corresponding to the filtering rule, adjust the filtering rule.

The sending module is further configured to issue an adjusted filtering rule to the network edge node, where the adjusted filtering rule is used by the network edge node to invoke the rule engine to parse and execute the adjusted filtering rule.

According to a fifth aspect, an embodiment of this application provides a computing device cluster. The computing device cluster includes at least one computing device, and each computing device includes a processor and a memory. A processor of the at least one computing device is configured to execute instructions stored in a memory of the at least one computing device, to enable the computing device cluster to perform the traffic filtering method according to any one of the first aspect or the possible implementations of the first aspect, or enable the computing device cluster to perform the traffic filtering method according to any one of the second aspect or the possible implementations of the second aspect.

According to a sixth aspect, a traffic filtering system is provided. The traffic filtering system includes a network edge node and a service analysis component.

The network edge node is configured to perform the method according to any one of the first aspect or the possible implementations of the first aspect, and the service analysis component is configured to perform the method according to any one of the second aspect or the possible implementations of the second aspect.

According to a seventh aspect, an embodiment of this application provides a computer program or product including instructions. When the instructions are run by a computing device cluster, the computing device cluster is enabled to perform the traffic filtering method according to any one of the first aspect or the possible implementations of the first aspect, or the computing device cluster is enabled to perform the traffic filtering method according to any one of the second aspect or the possible implementations of the second aspect. The computer program or product may be a software installation package. When a function of the computing device cluster needs to be implemented, the computer program or product may be downloaded and executed on the computing device cluster.

According to an eighth aspect, an embodiment of this application provides a computer-readable storage medium, including computer program instructions. When the computer program instructions are executed by a computing device cluster, the computing device cluster is enabled to perform the traffic filtering method according to any one of the first aspect or the possible implementations of the first aspect, or the computing device cluster is enabled to perform the traffic filtering method according to any one of the second aspect or the possible implementations of the second aspect. The storage medium includes but is not limited to a volatile memory, for example, a random access memory; and a non-volatile memory, for example, a flash memory, a hard disk drive (hard disk drive, HDD), or a solid-state drive (solid-state drive, SSD).

It should be understood that, for beneficial effect achieved by the technical solutions in the second aspect to the eighth aspect and the corresponding possible implementations in this application, refer to the foregoing technical effect in the first aspect and the corresponding possible implementations. Details are not described herein again.

### BRIEF DESCRIPTION OF DRAWINGS

FIG. 1 is a diagram of a packet format of a filtering action according to an embodiment of this application;
FIG. 2 is a diagram of an implementation environment of a traffic filtering method according to an embodiment of this application;
FIG. 3 is a diagram of another implementation environment of a traffic filtering method according to an embodiment of this application;
FIG. 4 is a flowchart of a traffic filtering method according to an embodiment of this application;
FIG. 5 is a diagram of defining a filtering rule according to an embodiment of this application;
FIG. 6 is a diagram of a format of NLRI according to an embodiment of this application;
FIG. 7 is a diagram of deployment of a rule engine according to an embodiment of this application;
FIG. 8 is a diagram of deployment of another rule engine according to an embodiment of this application;
FIG. 9 is a diagram of interaction of a traffic filtering method according to an embodiment of this application;
FIG. 10 is a diagram of a system framework of a traffic filtering method according to an embodiment of this application;
FIG. 11 is a diagram of a structure of a traffic filtering apparatus according to an embodiment of this application;
FIG. 12 is a diagram of a structure of another traffic filtering apparatus according to an embodiment of this application;
FIG. 13 is a diagram of a hardware structure of a computing device according to an embodiment of this application;
FIG. 14 is a diagram of a structure of a computing device cluster according to an embodiment of this application; and
FIG. 15 is a diagram of a connection manner of a computing device cluster according to an embodiment of this application.

### DESCRIPTION OF EMBODIMENTS

To make objectives, technical solutions, and advantages of this application clearer, the following further describes in detail implementations of this application with reference to accompanying drawings.

With development of services and networks, network threats become increasingly complex. Usually, the network threats are caused by abnormal traffic. Therefore, how to filter the abnormal traffic at a network edge to avoid the network threats is an urgent problem to be resolved.

In a related technology, through expansion of BGP NLRI, a BGP flow specification (FlowSpec) technology is defined in request for comments (request for comments, RFC) 5575, to deal with large-scale traffic attacks at a network layer, for example, a large-scale traffic attack sent by a network side to a user terminal. The FlowSpec technology includes matching rules and actions. The matching rules may be created based on condition variables and operators. The actions include classification, rate limiting, redirection, and the like. For example, a corresponding action is executed when traffic matches a matching rule. Therefore, in the FlowSpec technology, a routing forwarding table can implement functions similar to those of an access control list (access control list, ACL) and a firewall, and can quickly filter out a distributed denial of service (distributed denial of service, DDoS) attack.

The condition (condition) variable in the FlowSpec technology is described in MP_REACH_NLRI or MP_UNREACH_NLRI defined in RFC 4760. Refer to Table 1. The FlowSpec technology defines 12 types that can be specified as condition variables, so that the FlowSpec technology can support control and processing of network-layer traffic in a plurality of scenarios. For example, a type 3 is a protocol number in an IP packet, a type 4 is a transmission control protocol (transmission control protocol, TCP)/user datagram protocol (user datagram protocol, UDP) source or destination port number, a type 7 is an internet control message protocol (internet control message protocol, ICMP) type, a type 8 is an ICMP code, and a type 11 is a differentiated services code point (differentiated services code point, DSCP).

**Table 1**

| | | |
|---|---|---|
| Type 1 | Destination prefix | Destination address/prefix of a data packet |
| Type 2 | Source prefix | Source address/prefix of a data packet |
| Type 3 | IP protocol | Protocol number |
| Type 4 | Port | TCP/UDP source or destination port number |
| Type 5 | Destination port | TCP/UDP destination port number |
| Type 6 | Source port | TCP/UDP source port number |
| Type 7 | ICMP type | ICMP type |
| Type 8 | ICMP code | ICMP code |
| Type 9 | TCP flag | TCP flag |
| Type 10 | Packet length | Total length of a data packet |
| Type 11 | DSCP | Diffserv code point (differentiated services code point) |
| Type 12 | Fragment | Fragment flag |

For the condition variables of the type 3 to the type 12 shown in Table 1, matching rules can be created using equality or inequality comparison operators, or jointly using a plurality of types. For example, in the FlowSpec technology, the matching rules and the corresponding actions may be configured and managed in a centralized manner, and the matching rules and the actions are applied to other BGP routers in a BGP route update method. For example, the BGP router may be a network edge node.

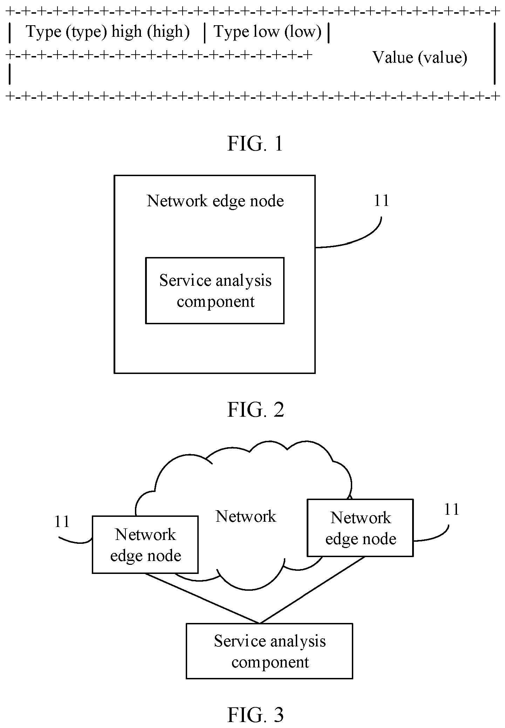

With reference to FIG. 1, a packet format of the action (action) in the FlowSpec technology includes a type (type) field and a value (value) field, and the type field includes two parts: a high (high) part and a low (low) part. A type 0x80006 indicates use of a 4-byte floating-point number to specify a traffic rate. A unit of the traffic rate is bits per second (bits per second, bps). If a value of the traffic rate is specified as 0, traffic is dropped. A type 0x8007 indicates a terminal bit and a sample bit. If the terminal bit is set, a subsequent normal operation is performed. If the terminal bit is not set, an operation ends. If the sampling bit is set, sampling and recording are performed. A type 0x8008 indicates traffic redirection, for example, redirection to virtual routing forwarding (virtual routing forwarding, VRF). A type 0x8000 indicates DSCP marking or re-marking of an IP packet.

In conclusion, the FlowSpec technology in the related technology is mainly used to filter network-layer traffic, and it is difficult to meet a filtering requirement of a more complex and refined service. Embodiments of this application provide a traffic filtering method, to filter network-side traffic at a network edge, and filter application-side traffic at the network edge, so as to meet a filtering requirement of a more complex and refined service.

FIG. 2 is a diagram of an implementation environment of a traffic filtering method according to an embodiment of this application. As shown in FIG. 2, the implementation environment includes a network edge node 11, and the network edge node 11 is a border device located between a network and a user. In a cloud scenario, the network edge node 11 may be a network edge node that provides a cloud service. The network edge node 11 includes a service analysis component, and the service analysis component is configured to: analyze traffic transmitted by the network edge node 11, and obtain a filtering rule based on an analysis result. A quantity of network edge nodes shown in FIG. 2 is merely an example. During actual application, the quantity of network edge nodes may be greater or less according to a network deployment requirement.

For example, the network edge node 11 refers to a network edge access point formed by a network device, a security device, and another device that are deployed at a network edge. For example, the network edge node 11 includes but is not limited to a router, a switch, and the security device. In a cloud computing data center, the network edge node 11 may refer to a network node that has few intermediate links with a finally accessed user, and may be an equipment room or a physical device. In this case, the network edge node 11 may cache content of an origin server to a server of the network edge node, which can improve a speed and quality of user access to the content of the origin server compared with direct access to the origin server.

In the traffic filtering method provided in embodiments of this application, the network edge node 11 may filter traffic sent by the network to user equipment, that is, block network-layer abnormal traffic in the network, to avoid impact of the network-layer abnormal traffic on the user equipment; and filter traffic sent by the user equipment to the network, that is, block application-layer abnormal traffic outside the network, to avoid impact of the application-layer abnormal traffic on an infrastructure in the network and a downstream service server. The abnormal traffic refers to traffic that poses a security threat to a communication network.

For example, the network includes two network edge nodes. FIG. 3 is a diagram of another implementation environment of a traffic filtering method according to an embodiment of this application. As shown in FIG. 3, the service analysis component is not deployed in the network edge node 11, but is mounted beside the network edge node 11. For example, the service analysis component is deployed on a device close to a user side outside the network edge node 11. In the cloud scenario, the service analysis component may be a service analysis component that provides a cloud service. In the implementation environment shown in FIG. 3, the service analysis component can be connected to each network edge node 11 in the network. Therefore, the service analysis component is configured to: perform global analysis on traffic transmitted by each network edge node 11, and obtain a filtering rule based on a global analysis result, so that accuracy of the obtained filtering rule can be improved. Optionally, after obtaining the filtering rule, the service analysis component needs to issue the obtained filtering rule to each network edge node 11 in the network. For example, the service analysis component may issue the obtained filtering rule to each network edge node 11 in the network in a BGP route update method.

For example, the service analysis component may be deployed on a server. The server may be, for example, a central server, an edge server, or a local server in a local data center. The server may be a physical server, or may be a cloud server that provides a cloud computing service. In some embodiments, the service analysis component may alternatively be deployed on a terminal device, for example, a desktop computer, a notebook computer, or a smartphone; or deployed on a network device, for example, a router or a switch. A form of a product in which the service analysis component is deployed is not limited in embodiments of this application.

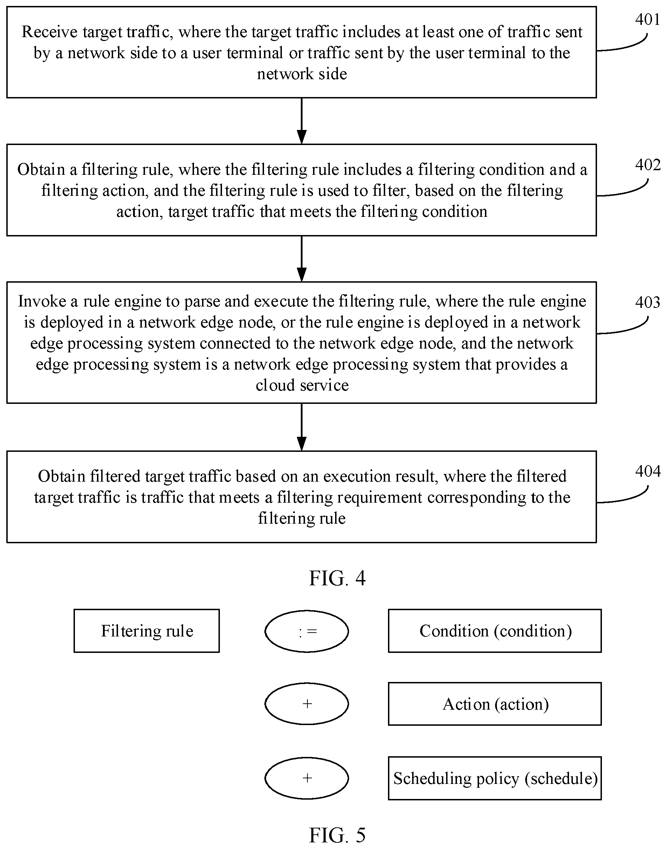

FIG. 4 is a flowchart of a traffic filtering method according to an embodiment of this application. The method may be applied to the implementation environment shown in FIG. 2 or FIG. 3. An example in which the network edge node 11 that provides a cloud service performs the method is used for description. As shown in FIG. 4, the traffic filtering method includes but is not limited to the following step 401 to step 404.

Step 401: Receive target traffic, where the target traffic includes at least one of traffic sent by a network side to a user terminal or traffic sent by the user terminal to the network side.

In this embodiment of this application, the received target traffic is to-be-filtered traffic. The target traffic may be the traffic sent by the network side to the user terminal, or may be the traffic sent by the user terminal to the network side, or may be both the traffic sent by the network side to the user terminal and the traffic sent by the user terminal to the network side. The traffic sent by the network side to the user terminal may be referred to as network-layer traffic, and the traffic sent by the user terminal to the network side may be referred to as application-layer traffic. In this way, in addition to supporting filtering of the traffic sent by the network side to the user terminal, the method further supports filtering of the traffic sent by the user terminal to the network side, so that a filtering requirement of a service with refined development can be met.

Step 402: Obtain a filtering rule, where the filtering rule includes a filtering condition and a filtering action, and the filtering rule is used to filter, based on the filtering action, target traffic that meets the filtering condition.

In this embodiment of this application, the filtering rule includes the filtering condition and the filtering action, and is used to filter, based on the filtering action, the target traffic that meets the filtering condition. The filtering condition and the filtering action included in the filtering rule may be flexibly defined and extended, to meet a filtering requirement of a refined service. In addition, in addition to the filtering condition and the filtering action, the filtering rule may further include parameters such as a data source and a scheduling policy, to further improve a flexible definition capability of the filtering rule, obtain a more refined filtering rule, enable the filtering rule to represent more diverse behaviors, and resolve a problem that quantities of condition variables, operators, and supported actions defined in the FlowSpec technology are very limited.

For example, FIG. 5 is a diagram of defining a filtering rule according to an embodiment of this application. With reference to FIG. 5, the filtering rule provided in this embodiment of this application is described. As shown in FIG. 5, a definition of the filtering rule includes but is not limited to the following three parts: a condition (condition), an action (action), and a scheduling policy (schedule). The condition corresponds to the filtering condition, the action corresponds to the filtering action, and the schedule corresponds to the scheduling policy.

The condition is a conditional expression, and is an entry condition for executing the action. When the filtering rule is executed, if currently transmitted traffic meets the condition, the corresponding action is executed; or if currently transmitted traffic does not meet the condition, the corresponding action is not executed. The action is an execution action, and is a specific handling policy corresponding to the filtering rule. For example, if the currently transmitted traffic meets the condition, the currently transmitted traffic is handled according to an action that is set based on the action. The schedule is a scheduling policy, and is execution timing of the filtering rule. The scheduling policy may be set for execution of the filtering rule according to the schedule, to meet an execution requirement of traffic filtering in a plurality of scenarios.

Optionally, an expression of the filtering condition may support at least one of a logical operation, a relational operation, a bitwise operation, an arithmetic operation, a feature matching operation, an operator precedence, a behavior description, or an object reference. The feature matching operation includes a binary matching operation, a character string matching operation, and the like, and may support regular expression matching. The operator precedence may support use of parentheses, for example, a priority of an expression in the parentheses is higher than a priority of an expression outside the parentheses. The behavior description includes but is not limited to a description of a behavior frequency, a description of a sequence to which a behavior belongs, and the like. The object reference may introduce more extended conditional objects for the expression of the filtering condition, for example, implement reference to a third-party object by using a shared resource in the data source. In this way, richer conditional operations and conditional objects are provided, so that the filtering rule can support more diverse filtering conditions, and therefore can support more diverse service traffic filtering scenarios.

The filtering action includes but is not limited to at least one of dropping, rate limiting, traffic limiting, blocklist filtering, trustlist filtering, redirection, or customization. For the target traffic that meets the filtering condition, the dropping may mean performing a packet dropping operation on the target traffic, the rate limiting may mean limiting a transmission rate of the target traffic, the traffic limiting may mean limiting a volume of the transmitted target traffic, the blocklist filtering may mean adding the target traffic to a blocklist, the trustlist filtering may mean adding the target traffic to a trustlist, the redirection may mean redirecting the target traffic to a VPN, an IP address, a tunnel, or the like, and the customization may mean an action defined by a user according to a service filtering requirement, for example, using the shared resource in the data source to invoke a third party to perform a corresponding action, for example, invoke a third-party firewall to filter the target traffic. In this way, richer filtering actions are provided, so that the filtering rule can support more diverse service traffic filtering scenarios.

It can be learned from the foregoing expansion of the filtering condition and the filtering action that the filtering rule further includes the data source, and the data source includes at least one of a data packet or the shared resource. The data packet is used to specify an application scope of the filtering rule. For example, if the filtering rule is executed in a specified data packet, the target traffic is within a range of the data packet. The data packet may be implemented by using a protocol variable. The shared resource is used to provide data support for the filtering condition or the filtering action of the filtering rule, so that the filtering condition or the filtering action is further extended, and therefore the filtering rule can support a filtering requirement of a complex service. The shared resource may be implemented by invoking a third-party resource by using a uniform resource identifier (uniform resource identifier, URI). For example, the shared resource may be used to introduce globally shared objects such as a key, a certificate, a geographical database, and a reputation database for the condition.

In this embodiment of this application, the schedule is used to define the scheduling policy for executing the filtering rule. Optionally, execution time of filtering is scheduled by using the schedule. The scheduled time may be a combination of a time range and a periodicity. For example, the scheduled time is a period from 11:00 to 14:00 every day. A tag is used to label the filtering rule, and a composite tag is supported. For example, the tag may be "filter", and the composite tag may be "network-side traffic filter" or "application-side traffic filter". In this way, through flexible setting of a rule identifier, the data source, the condition, the action, the schedule, the tag, and the like, various complex filtering rules can be obtained, so that the filtering rules are applicable to complex and refined filtering of application-side traffic.

For example, a definition of a complete filtering rule may include the rule identifier, the data source, the condition, the action, the schedule, and the tag (tag). The rule identifier is a globally unique identifier. Optionally, a rule identifier may be set for each filtering rule in a sequential numbering manner of 1, 2, 3, ..., or a corresponding rule identifier may be set based on an object corresponding to each filtering rule. Other rule identifier setting manners are not listed one by one in this embodiment of this application.

In the complete filtering rule, an expression of the condition may include an object and an attribute condition. The object corresponds to the target traffic in this embodiment of this application. Optionally, a type of the object may be extended by using the shared resource in the data source. The attribute condition corresponds to the filtering condition in this embodiment of this application, and may support a logical operation (&&, ∥, and !), a relational operation (==, !=, >, >=, <, and <=), a bitwise operation (&, |, ^, ~, <<, and >>), an arithmetic operation (+, -, *, and /), a feature matching operation (supporting regular expressions), an operator precedence (supporting parentheses), a keyword "in", and using "." to reference an object, and the like. The keyword "in" is used to determine whether a value is included in a specified sequence. It can be learned that the expression of the condition can support richer conditional operations and conditional objects, so that the filtering rule can support more diverse service traffic filtering scenarios.

In the complete filtering rule, parameters of the action include and support "dropping (drop)", "rate limiting (ratelimit)", "traffic limiting (trafficlimit)", "blocklist (blacklist)", "trustlist (whitelist)", "redirection (redirect)", "customization", and the like. The parameter "redirect" supports tunneling, that is, redirection to a tunnel. Through expansion of the parameters of the action, the filtering rule can support richer filtering actions, that is, the filtering rule can support more diverse service traffic filtering scenarios.

A coding scheme of the filtering rule provided in this embodiment of this application includes but is not limited to binary, an XML format, or a JSON format. The XML format or the JSON format can support implementation of the foregoing extended conditional operation expression, conditional object expression, and the like, and can further support more diverse service traffic filtering scenarios, so that not only the traffic sent by the network side to the user terminal can be filtered, but also the traffic sent by the user terminal to the network side can be filtered.

For example, the XML format is used as an example, and the definition of the filtering rule may be implemented by using the following code. The rule identifier (rule id) is 100; the data source (data-source) is a specified packet (data packet); the schedule is 01:00 every day (01:00 every day); the tag is "filter (filter)"; expression traffic space (expression traffic-space) is a source address (source) 1.1.1.0/24, a destination address (dst) 2.2.2.2/32, a transmission protocol "tcp", and a destination port (dst port) 8080, where the expression traffic space corresponds to the object in the condition; the attribute condition in the condition is that a transmission rate (ip.dst.bps) is greater than or equal to 100 (megabits per second, Mbps) or a quantity of connections (ip.dst.connections) is greater than 1000; the action is to execute (do) rate limiting (ratelimit) if the condition is met; and a parameter (params) of rate limiting is 100 (precision positioning system, pps). Mbps is a unit of the transmission rate, and is a quantity of bits (bits) transmitted per second. pps is a common unit of a network throughput, and is a quantity of packets sent per second.

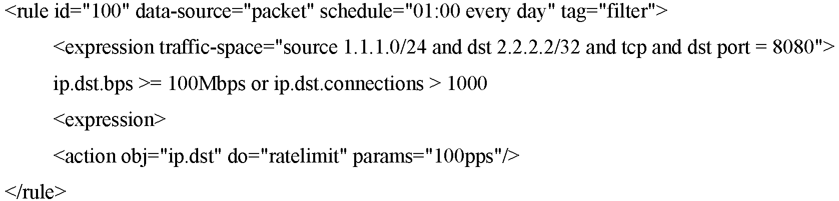

Therefore, a traffic filtering scenario implemented by using the filtering rule is as follows: For target traffic whose source address is 1.1.1.0/24, destination address is 2.2.2.2/32, transmission protocol is "tcp", and destination port is 8080 in the packet, if the transmission rate of the target traffic is greater than or equal to 100 Mbps or the quantity of connections of the target traffic is greater than 1000, a rate of the target traffic is limited to 100 pps.

In this embodiment of this application, a manner in which the network edge node obtains the filtering rule includes but is not limited to the following two manners.

Manner 1: Analyze target traffic transmitted by the network edge node, and obtain the filtering rule based on an analysis result.

In the manner 1, the network edge node can analyze target traffic that is historically transmitted and target traffic that is being transmitted by the network edge node, construct a service traffic model based on an analysis result, convert the service traffic model into a corresponding filtering rule, and then obtain the filtering rule. Filtered target traffic obtained according to the filtering rule can meet a filtering requirement corresponding to the filtering rule, that is, a filtering requirement corresponding to a service. The filtering rule obtained by analyzing the target traffic is then applied to filtering of the target traffic, so that accuracy of the obtained filtering rule is improved.

A normal traffic model or an abnormal traffic model may be constructed based on the analysis result. If the normal traffic model is constructed, the filtering requirement corresponding to the filtering rule may be obtaining normal traffic of the service from the target traffic through filtering, and allowing transmission of the normal traffic of the service. If the abnormal traffic model is constructed, the filtering requirement corresponding to the filtering rule may be filtering out abnormal traffic of the service from the target traffic, and disallowing transmission of the abnormal traffic of the service.

Manner 2: Receive the filtering rule issued by a service analysis component, where the filtering rule is obtained by the service analysis component by analyzing target traffic transmitted by a network edge node in a network.

In the manner 2, with reference to the implementation environment shown in FIG. 3, the service analysis component is deployed outside the network edge node, and the filtering rule is obtained by collecting and analyzing target traffic transmitted by each network edge node in the network. The filtering rule obtained through global analysis is more representative and better meets a service filtering requirement. Further, the service analysis component needs to synchronize the obtained filtering rule to the network edge node, so that the network edge node can receive and execute the filtering rule.

Optionally, the service analysis component may invoke a network controller to send a BGP update message to an RR, where the BGP update message includes NLRI, and the NLRI indicates the filtering rule. Then, the RR reflects the BGP update message to the network edge node in the network. In the BGP, the RR is configured to send routing information from an internal BGP neighbor to another internal BGP neighbor or a group of internal BGP neighbors, so that internal BGP neighbor configuration can be simplified. For example, the RR is connected to all network edge nodes in the network. When receiving any message, the RR synchronously reflects the message to all the network edge nodes in the network, to implement fast synchronization of message between the network edge nodes. Therefore, in this embodiment of this application, a characteristic of the RR is used, so that the filtering rule can be quickly propagated to all the network edge nodes in the network.

For example, a process of receiving the filtering rule issued by the service analysis component may be: receiving the BGP update message sent by the RR, where the BGP update message is sent by the service analysis component to the RR by invoking the network controller; and obtaining the filtering rule based on the BGP update message. For example, after the BGP update message is received, content of the NLRI in the BGP update message is read, and the content of the NLRI is converted into the filtering rule.

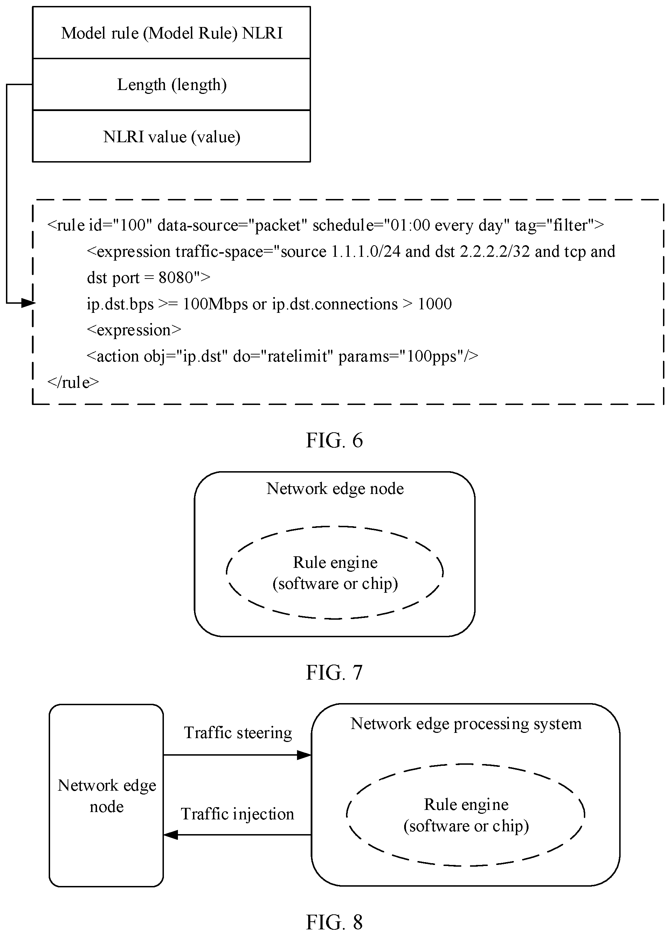

In a process of propagating the BGP update message, the BGP NLRI is extended, so that the NLRI carried in the BGP update message can carry the filtering rule in this embodiment of this application. For example, in this embodiment of this application, a definition of model rule (ModuleRule) NLRI is added, so that the ModuleRule NLRI can carry the filtering rule and be propagated in the network. For example, the definition of the ModuleRule NLRI may be shown in FIG. 6. The ModuleRule NLRI includes a ModuleRule NLRI field, a length (length) field, and an NLRI value (value) field. The length field and the NLRI value field are used to carry the filtering rule. For descriptions of the filtering rule in FIG. 6, refer to the filtering rule described by using the XML format as an example. Details are not described herein again.

Therefore, the RR can quickly synchronize, to all the network edge nodes in the network, the filtering rule generated by the service analysis component or a filtering rule that needs to be verified by an administrator as soon as possible. This resolves a problem in some large-scale closed networks that a filtering rule is issued slowly because network access interfaces are usually distributed on a plurality of network edge nodes in different regions.

Optionally, the method for propagating the filtering rule in the manner 2 may be applied to any scenario in which service handling is implemented according to a rule. For example, in addition to a traffic filtering scenario, for another traffic handling scenario, if a rule is used for implementation, the method for propagating a rule to all network edge nodes in a network based on an RR provided in this application may be used.

Regardless of the manner 1 or the manner 2, the network edge node can obtain the filtering rule generated based on an analysis structure of the transmitted target traffic. A method for analyzing the target traffic is not limited in this embodiment of this application. Optionally, a corresponding normal service model or abnormal traffic model may be constructed for multi-dimensional data of the transmitted target traffic, and the normal service model or the abnormal traffic model is converted by using a rule description language to obtain the filtering rule. The multi-dimensional data includes but is not limited to a traffic volume, a delay, a throughput, a quantity of connections, a quantity of retransmissions, or the like. A model construction method may be any method for performing statistical analysis on a service or traffic, including but not limited to a method used by NetFlow. NetFlow is software specifically used to monitor network traffic.

Step 403: Invoke a rule engine to parse and execute the filtering rule, where the rule engine is deployed in the network edge node, or the rule engine is deployed in a network edge processing system connected to the network edge node, and the network edge processing system is a network edge processing system that provides a cloud service.

In this embodiment of this application, after obtaining the filtering rule, the network edge node may filter the target traffic according to the filtering rule. Optionally, the network edge node invokes the rule engine to parse and execute the filtering rule, to filter the transmitted target traffic. The rule engine supports an elastic rule scaling mechanism, so that the network edge node can parse and execute the received filtering rule.

In a possible implementation, with reference to FIG. 7, the rule engine is deployed in the network edge node. Alternatively, with reference to FIG. 8, the rule engine is deployed in the network edge processing system connected to the network edge node. In other words, the rule engine may be flexibly deployed in a form of software or a chip. If the rule engine is deployed in the network edge node, execution of the filtering rule can be simple. If the rule engine is deployed outside the network edge node, a requirement on a computing capability of the network edge node can be reduced. Therefore, the traffic filtering method is more flexibly implemented, and is applicable to different types of network edge nodes.

Step 404: Obtain filtered target traffic based on an execution result, where the filtered target traffic is traffic that meets the filtering requirement corresponding to the filtering rule.

After the network edge node invokes the rule engine to parse and execute the filtering rule, an execution result corresponding to the rule engine may be obtained, and the filtered target traffic is further obtained based on the execution result. Optionally, after the filtered target traffic is obtained, the filtered target traffic is transmitted. Because the filtered target traffic is traffic that meets the filtering requirement corresponding to the filtering rule, transmission of the filtered target traffic can meet the filtering requirement, so that security of traffic transmission is improved.

For example, in the rule engine deployment scenario shown in FIG. 8, because the network edge processing system is attached to a device outside the network edge node in bypass mode, to implement the traffic filtering method provided in this embodiment of this application, the network edge processing system may extract the target traffic from the network edge node by using a traffic steering technology, and after the target traffic is filtered by the rule engine of the network edge processing system, send the filtered target traffic back to the network edge node by using a traffic injection technology.

After the transmitted target traffic is filtered according to the filtering rule, the network edge node in the manner 1 or the service analysis component in the manner 2 can monitor and analyze an execution status of the filtering rule, to adjust the filtering rule in time when a deviation occurs during execution of the filtering rule.

Optionally, a filtering result of filtering, by the network edge node, the transmitted target traffic according to the filtering rule is obtained, in other words, an execution result of executing the filtering rule by the network edge node is obtained. If the execution result does not meet the filtering requirement corresponding to the filtering rule, the filtering rule is adjusted, and an adjusted filtering rule is issued to the network edge node, where the adjusted filtering rule is used by the network edge node to filter the transmitted target traffic according to the adjusted filtering rule. Real-time monitoring and adjustment of the filtering rule can improve filtering effect of the traffic filtering method.

In conclusion, according to the traffic filtering method provided in this embodiment of this application, the filtering rule is obtained by analyzing the transmitted traffic, so that the obtained filtering rule can not only be used to filter the traffic sent by the network side to the user terminal, but also be used to filter the traffic sent by the user terminal to the network side, and the obtained filtering rule can be issued to the network edge node in time for filtering. Therefore, the method can meet a filtering requirement of a refined service, and can be flexibly applied to various traffic filtering scenarios.

In addition, more refined filtering conditions and richer filtering actions are defined for the filtering rule, and the filtering rule is carried by extending the BGP NLRI, so that the filtering rule can be synchronized by the RR to all the network edge nodes in the network, to implement fast propagation of the filtering rule. The rule engine that executes the filtering rule supports the elastic rule scaling mechanism, and a capability of the rule engine can be dynamically extended without changing a network infrastructure, so that the rule engine can parse and execute a complex filtering rule.

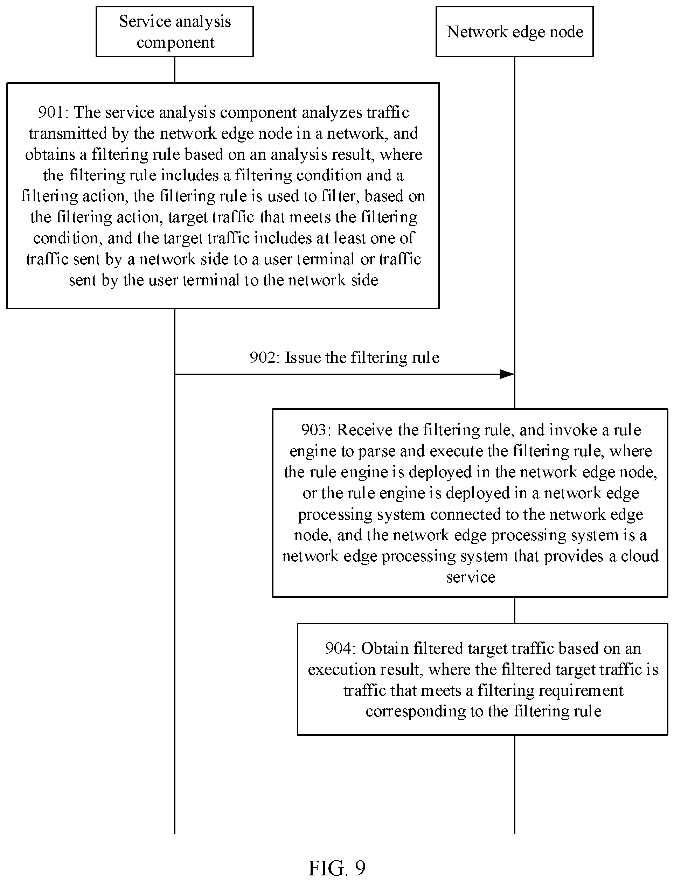

FIG. 9 is a diagram of interaction of a traffic filtering method according to an embodiment of this application. The method may be applied to the implementation environment shown in FIG. 3. An example in which a network edge node and a service analysis component perform the method is used for description. As shown in FIG. 9, the traffic filtering method includes but is not limited to the following step 901 to step 904.

Step 901: The service analysis component analyzes traffic transmitted by the network edge node in a network, and obtains a filtering rule based on an analysis result, where the filtering rule includes a filtering condition and a filtering action, the filtering rule is used to filter, based on the filtering action, target traffic that meets the filtering condition, and the target traffic includes at least one of traffic sent by a network side to a user terminal or traffic sent by the user terminal to the network side.

Step 902: The service analysis component issues the filtering rule to the network edge node.

Step 903: The network edge node receives the filtering rule, and invokes a rule engine to parse and execute the filtering rule, where the rule engine is deployed in the network edge node, or the rule engine is deployed in a network edge processing system connected to the network edge node, and the network edge processing system is a network edge processing system that provides a cloud service.

Step 904: Obtain filtered target traffic based on an execution result, where the filtered target traffic is traffic that meets a filtering requirement corresponding to the filtering rule.

For implementations of step 901 to step 904, refer to the related descriptions in step 401 to step 404. Details are not described herein again.

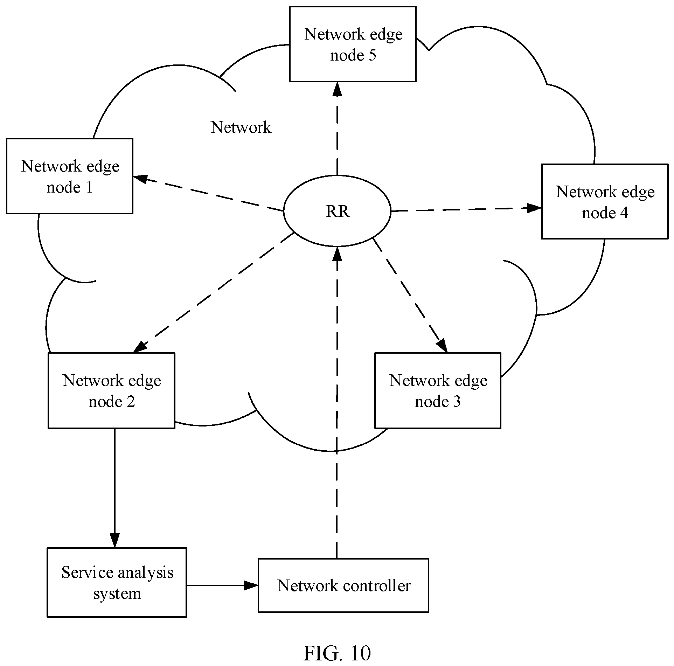

FIG. 10 is a diagram of a system framework of a traffic filtering method according to an embodiment of this application. A service analysis component, a network controller, an RR, and a network edge node jointly implement traffic filtering.

The service analysis component is deployed near a service end, and is configured to: analyze service traffic, and obtain a filtering rule of a target service based on an analysis result. For example, the service analysis component collects and analyzes a plurality of types of information about a network, the service, and running of the network and the service, to construct a normal service model or an abnormal traffic model of the service traffic; and converts the constructed normal service model or abnormal traffic model into a rule description language, to obtain the filtering rule. Optionally, the filtering rule is used to avoid a network attack caused by abnormal traffic.

The service analysis component is further configured to: invoke a northbound application programming interface (application programming interface, API) of the network controller to issue the filtering rule to the RR, sense and trace an execution status of the filtering rule, adjust the normal service model or abnormal traffic model in time if a deviation occurs during execution, and further adjust the filtering rule. In this way, the service analysis component can quickly detect and respond to abnormal traffic of the network and the service.

The network controller is an orchestration component of network functions, is a control medium between a service management system and a network infrastructure, and is configured to issue the filtering rule to each network edge node in the network. For example, the filtering rule is issued to the RR by including the filtering rule in BGP extended NLRI and including the extended NLRI in a BGP update message.

The RR is configured to reflect, to each network edge node in the network through BGP interaction, the BGP update message received from the network controller, to propagate the filtering rule in the entire network. Further, the network edge node converts the received BGP update message into the filtering rule, and invokes a software/hardware rule engine on a data plane to parse and execute the filtering rule, to filter the service traffic at a network edge.

In embodiments of this application, product forms of the service analysis component, the network controller, and the network edge node are not limited. For example, the service analysis component, the network controller, or the network edge node may be a product, middleware, a development package, or a chip.

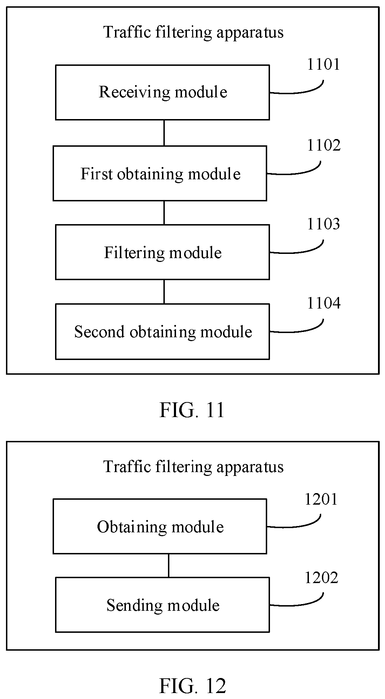

The traffic filtering method in embodiments of this application is described above. In correspondence to the method, embodiments of this application further provide a traffic filtering apparatus. FIG. 11 is a diagram of a structure of a traffic filtering apparatus according to an embodiment of this application. The apparatus is used for a network edge node. Based on the following plurality of modules shown in FIG. 11, the traffic filtering apparatus shown in FIG. 11 can perform all or some of operations performed by the network edge node. It should be understood that the apparatus may include more additional modules than the shown modules, or some of the shown modules are omitted. This is not limited in this embodiment of this application. As shown in FIG. 11, the apparatus includes:
a receiving module 1101, configured to receive target traffic, where the target traffic includes at least one of traffic sent by a network side to a user terminal or traffic sent by the user terminal to the network side;
a first obtaining module 1102, configured to obtain a filtering rule, where the filtering rule includes a filtering condition and a filtering action, the filtering rule is used to filter, based on the filtering action, target traffic that meets the filtering condition, and the target traffic includes at least one of traffic sent by the network side to the user terminal or traffic sent by the user terminal to the network side;
a filtering module 1103, configured to invoke a rule engine to parse and execute the filtering rule, where the rule engine is deployed in the network edge node, or the rule engine is deployed in a network edge processing system connected to the network edge node, and the network edge processing system is a network edge processing system that provides a cloud service; and
a second obtaining module 1104, configured to obtain filtered target traffic based on an execution result, where the filtered target traffic is traffic that meets a filtering requirement corresponding to the filtering rule.

In a possible implementation, an expression of the filtering condition includes at least one of a logical operation, a relational operation, a bitwise operation, an arithmetic operation, a feature matching operation, an operator precedence, a behavior description, or an object reference.

In a possible implementation, the filtering action includes at least one of dropping, rate limiting, traffic limiting, blocklist filtering, trustlist filtering, redirection, or customization.

In a possible implementation, the filtering rule further includes a data source, the data source includes at least one of a data packet or a shared resource, the data packet is used to specify an application scope of the filtering rule, and the shared resource is used to provide data support for the filtering condition or the filtering action of the filtering rule.

In a possible implementation, the filtering rule further includes a scheduling policy for executing the filtering rule.

In a possible implementation, the first obtaining module 1102 is configured to: analyze target traffic transmitted by the network edge node, and obtain the filtering rule based on an analysis result.

In a possible implementation, the first obtaining module 1102 is configured to receive the filtering rule issued by a service analysis component, where the filtering rule is obtained by the service analysis component by analyzing target traffic transmitted by a network edge node in a network.

In a possible implementation, the first obtaining module 1102 is configured to receive a BGP update message reflected by a route reflector, where the BGP update message includes NLRI, the NLRI indicates the filtering rule, and the BGP update message is sent by the service analysis component to the route reflector by invoking a network controller.

FIG. 12 is a diagram of a structure of a traffic filtering apparatus according to an embodiment of this application. The apparatus is used for a service analysis component. Based on the following plurality of modules shown in FIG. 12, the traffic filtering apparatus shown in FIG. 12 can perform all or some of operations performed by the service analysis component. It should be understood that the apparatus may include more additional modules than the shown modules, or some of the shown modules are omitted. This is not limited in this embodiment of this application. As shown in FIG. 12, the apparatus includes:
an obtaining module 1201, configured to: analyze traffic transmitted by a network edge node in a network, and obtain a filtering rule based on an analysis result, where the filtering rule includes a filtering condition and a filtering action, the filtering rule is used to filter, based on the filtering action, target traffic that meets the filtering condition, the target traffic includes at least one of traffic sent by a network side to a user terminal or traffic sent by the user terminal to the network side, and the network edge node is a network edge node that provides a cloud service; and
a sending module 1202, configured to issue the filtering rule to the network edge node, where the filtering rule is used by the network edge node to invoke a rule engine to parse and execute the filtering rule, and the rule engine is deployed in the network edge node, or the rule engine is deployed in a network edge processing system connected to the network edge node.

In a possible implementation, an expression of the filtering condition includes at least one of a logical operation, a relational operation, a bitwise operation, an arithmetic operation, a feature matching operation, an operator precedence, a behavior description, or a reference object.

In a possible implementation, the filtering action includes at least one of dropping, rate limiting, traffic limiting, blocklist filtering, trustlist filtering, redirection, or customization.

In a possible implementation, the filtering rule further includes a data source, the data source includes at least one of a data packet or a shared resource, the data packet is used to specify an application scope of the filtering rule, and the shared resource is used to provide data support for the filtering condition or the filtering action of the filtering rule.

In a possible implementation, the filtering rule further includes a scheduling policy for executing the filtering rule.

In a possible implementation, the sending module 1202 is configured to invoke a network controller to send a BGP update message to a route reflector, so that the route reflector reflects the BGP update message to the network edge node, where the BGP update message includes NLRI, and the NLRI indicates the filtering rule.

In a possible implementation, the obtaining module 1201 is further configured to obtain an execution result of executing the filtering rule by the network edge node.

The apparatus further includes an adjustment module, configured to: if the execution result does not meet a filtering requirement corresponding to the filtering rule, adjust the filtering rule.

The sending module 1202 is further configured to issue an adjusted filtering rule to the network edge node, where the adjusted filtering rule is used by the network edge node to invoke the rule engine to parse and execute the adjusted filtering rule.

According to the traffic filtering apparatus provided in embodiments of this application, the filtering rule is obtained by analyzing the transmitted traffic, so that the obtained filtering rule can not only be used to filter the traffic sent by the network side to the user terminal, but also be used to filter the traffic sent by the user terminal to the network side, and the obtained filtering rule can be issued to the network edge node in time for filtering. Therefore, the method can meet a filtering requirement of a refined service, and can be flexibly applied to various traffic filtering scenarios.

It should be understood that, when the apparatus provided in FIG. 11 or FIG. 12 implements functions of the apparatus, division into the functional modules is merely used as an example for description. During actual application, the foregoing functions may be allocated to different functional modules for implementation according to a requirement. In other words, a device is divided into different functional modules in terms of an inner structure, to implement all or some of the functions described above. In addition, the apparatuses provided in the foregoing embodiments and the method embodiments pertain to a same concept. For specific implementation processes of the apparatuses, refer to the method embodiments. Details are not described herein again.

In addition, the traffic filtering apparatus shown in FIG. 11 is used as an example, and the receiving module 1101, the first obtaining module 1102, the filtering module 1103, and the second obtaining module 1104 may all be implemented by software, or may all be implemented by hardware. For example, the following uses the first obtaining module 1102 as an example to describe an implementation of the first obtaining module 1102. Similarly, for implementations of the receiving module 1101, the filtering module 1103, the second obtaining module 1104, and another module, refer to the implementation of the first obtaining module 1102. For example, for implementations of the modules in the traffic filtering apparatus shown in FIG. 12, refer to the implementation of the first obtaining module 1102.

When a module is used as an example of a software functional unit, the first obtaining module 1102 may include code run on a compute instance. The compute instance may include at least one of a physical host (computing device), a virtual machine, and a container. Further, there may be one or more compute instances. For example, the first obtaining module 1102 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers with similar geographical locations. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is set in one region (region). For communication between two VPCs in a same region and cross-region communication between VPCs in different regions, a communication gateway needs to be disposed in each VPC, and interconnection between the VPCs is implemented through communication gateways.

When a module is used as an example of a hardware functional unit, the first obtaining module 1102 may include at least one computing device. Alternatively, the first obtaining module 1102 may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field programmable gate array (field programmable gate array, FPGA), a generic array logic (generic array logic, GAL), or any combination thereof.

A plurality of computing devices included in the first obtaining module 1102 may be distributed in a same region or different regions. The plurality of computing devices included in the first obtaining module 1102 may be distributed in a same AZ or different AZs. Similarly, the plurality of computing devices included in the first obtaining module 1102 may be distributed in a same VPC or a plurality of VPCs. The plurality of computing devices may be any combination of computing devices such as a server, an ASIC, a PLD, a CPLD, an FPGA, and a GAL.

It should be noted that, in another embodiment, the first obtaining module 1102 may be configured to perform any step in the traffic filtering method. In other words, steps implemented by the receiving module 1101, the first obtaining module 1102, the filtering module 1103, and the second obtaining module 1104 may be specified according to a requirement, and the receiving module 1101, the first obtaining module 1102, the filtering module 1103, and the second obtaining module 1104 separately implement different steps in the traffic filtering method to implement all functions of the traffic filtering apparatus. In addition, the traffic filtering apparatuses provided in the foregoing embodiments and the embodiments of the traffic filtering methods pertain to a same concept. For specific implementation processes of the apparatuses, refer to the method embodiments. Details are not described herein again.

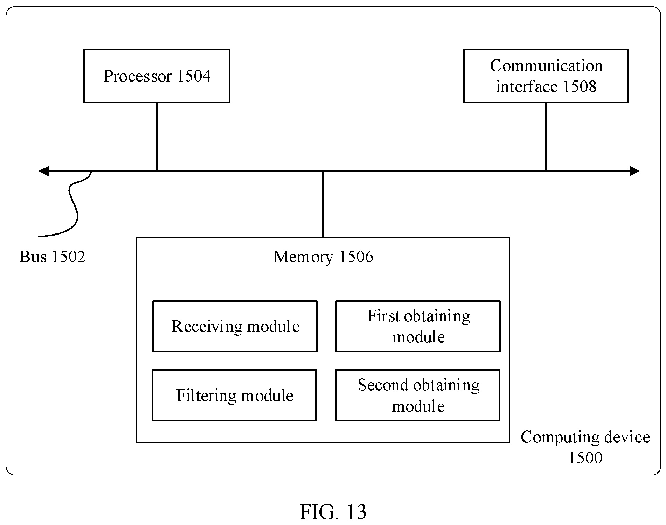

This application further provides a computing device that can be configured as a network edge node or a service analysis component in the foregoing implementation environment. FIG. 13 is a diagram of a hardware structure of a computing device according to an embodiment of this application. As shown in FIG. 13, the computing device 1500 includes a bus 1502, a processor 1504, a memory 1506, and a communication interface 1508. The processor 1504, the memory 1506, and the communication interface 1508 communicate with each other through the bus 1502. It should be understood that a quantity of processors and a quantity of memories in the computing device 1500 are not limited in this application.

The bus 1502 may be a peripheral component interconnect (peripheral component interconnect, PCI) bus or an extended industry standard architecture (extended industry standard architecture, EISA) bus, or the like. The bus may be classified as an address bus, a data bus, a control bus, or the like. For ease of representation, the bus is represented by using only one line in FIG. 13. However, it does not mean that there is only one bus or only one type of bus. The bus 1502 may include a path for transmitting information between components (for example, the memory 1506, the processor 1504, and the communication interface 1508) of the computing device 1500.

The processor 1504 may include any one or more of processors such as a central processing unit (central processing unit, CPU), a graphics processing unit (graphics processing unit, GPU), a microprocessor (microprocessor, MP), and a digital signal processor (digital signal processor, DSP).

The memory 1506 may include a volatile memory (volatile memory), for example, a random access memory (random access memory, RAM). The processor 1504 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1506 stores executable program code. The processor 1504 executes the executable program code to separately implement functions of the receiving module 1101, the first obtaining module 1102, the filtering module 1103, and the second obtaining module 1104, to implement the traffic filtering method. In other words, the memory 1506 stores instructions used to perform the traffic filtering method.

The communication interface 1508 uses a transceiver module, for example, but not limited to, a network interface card or a transceiver, to implement communication between the computing device 1500 and another device or a communication network.

An embodiment of this application further provides a computing device cluster. The computing device cluster includes at least one computing device. The computing device may be configured as a network edge node or a service analysis component in the foregoing implementation environment.

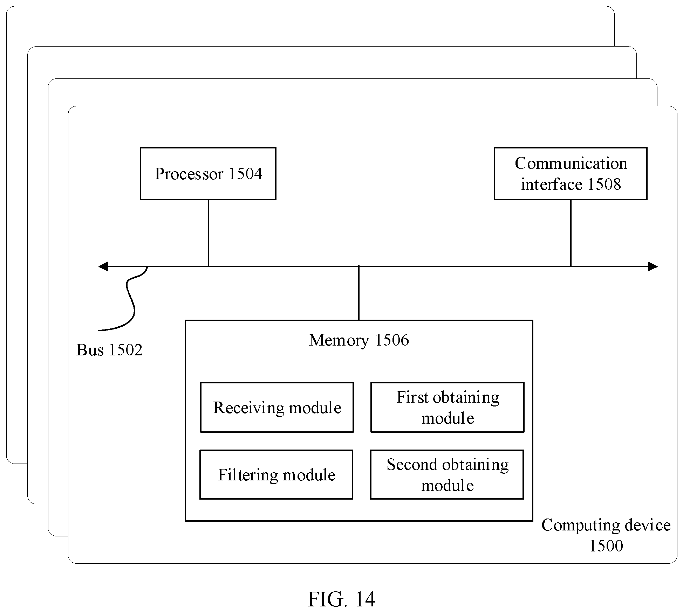

FIG. 14 is a diagram of a structure of a computing device cluster according to an embodiment of this application. As shown in FIG. 14, the computing device cluster includes at least one computing device 1500. A memory 1506 in one or more computing devices 1500 in the computing device cluster may store same instructions used to perform the traffic filtering method.

In some possible implementations, the memory 1506 in the one or more computing devices 1500 in the computing device cluster each may alternatively store a part of the instructions used to perform the traffic filtering method. In other words, a combination of the one or more computing devices 1500 may jointly execute the instructions used to perform the traffic filtering method.

It should be noted that memories 1506 in different computing devices 1500 in the computing device cluster may store different instructions separately used to perform parts of functions of the traffic filtering apparatus. In other words, the instructions stored in the memories 1506 in the different computing devices 1500 may implement functions of one or more of the receiving module 1101, the first obtaining module 1102, the filtering module 1103, and the second obtaining module 1104.

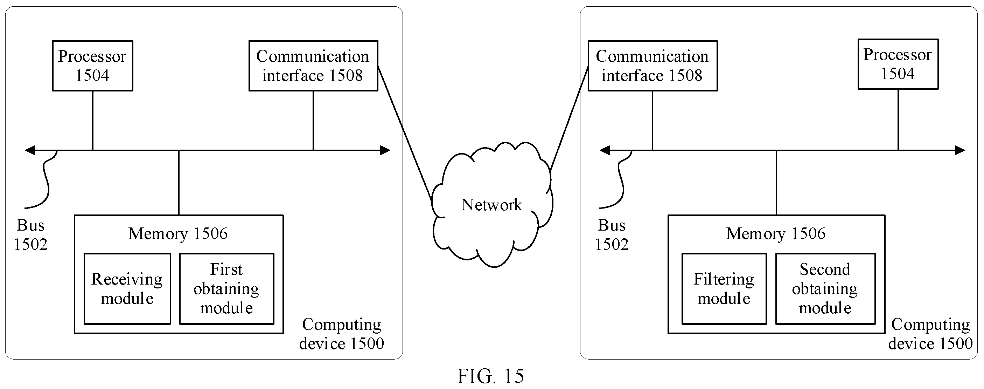

In some embodiments, the one or more computing devices in the computing device cluster may be connected through a network. The network may be a wide area network, a local area network, or the like. FIG. 15 is a diagram of a connection manner of a computing device cluster according to an embodiment of this application. As shown in FIG. 15, two computing devices 1500 are connected through a network. Specifically, each computing device is connected to the network through a communication interface in the computing device. In this possible implementation, for the connection manner between computing devices shown in FIG. 15, considering that the traffic filtering method provided in this application involves a large amount of data processing, functions of the receiving module 1101 and the first obtaining module 1102 are performed by one computing device, and functions of the filtering module 1103 and the second obtaining module 1104 are performed by another computing device.

It should be understood that functions of the computing device 1500 shown in FIG. 15 may alternatively be completed by a plurality of computing devices 1500.

In some embodiments, the computing device cluster may be a server cluster or a distributed file system including a server and a plurality of physical servers, or a cloud server cluster that provides basic cloud computing services such as cloud storage, cloud services, cloud databases, cloud computing, cloud functions, network services, cloud communication, middleware services, domain name services, security services, content delivery networks (content delivery networks, CDNs), big data, and artificial intelligence platforms. This is not limited in this application.

An embodiment of this application further provides a traffic filtering system. The traffic filtering system includes a network edge node and a service analysis component. Optionally, the network edge node and the service analysis component may be the computing device 1500 or a plurality of computing devices 1500 shown in FIG. 13 to FIG. 15. For the traffic filtering method performed by the network edge node and the service analysis component, refer to the related descriptions of the embodiment shown in FIG. 4 or FIG. 9. Details are not described herein again.

An embodiment of this application further provides a computer program or product including instructions. The computer program or product may be software, a program, or a product that includes the instructions and that can run on a computing device or be stored in any usable medium. When the computer program or product runs on at least one computing device, the at least one computing device is enabled to perform the traffic filtering method.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid state drive), or the like. The computer-readable storage medium includes instructions, and the instructions instruct the computing device to perform the traffic filtering method.

The terms such as "first" and "second" in this application are used to distinguish between same or similar items with basically same purposes and functions. It should be understood that there is no logical or timing dependency between "first", "second", and "n^{th}", and neither a quantity nor an execution sequence is limited. It should be further understood that although the following descriptions use the terms such as "first" and "second" to describe various elements, these elements should not be limited by the terms. These terms are merely used to distinguish one element from another. For example, without departing from the scope of the various examples, a first device may be referred to as a second device; and similarly, a second device may be referred to as a first device. Both the first device and the second device may be devices, and may be separate and different devices in some cases.

The term "at least one" in this application means one or more, and the term "a plurality of" in this application means two or more. For example, a plurality of phrases refer to two or more phrases.

The foregoing descriptions are merely specific implementations of this application, but the protection scope of this application is not limited thereto. Any equivalent modification or replacement readily figured out by persons skilled in the art within the technical scope disclosed in this application shall fall within the protection scope of this application. Therefore, the protection scope of this application shall be subject to the protection scope of the claims.

All or some of the foregoing embodiments may be implemented by using software, hardware, firmware, or any combination thereof. When software is used to implement the embodiments, all or some of the embodiments may be implemented in a form of program structure information. The program structure information includes one or more program instructions. When the program instructions are loaded and executed on a computing device, the procedures or functions according to embodiments of this application are completely or partially generated.

Persons of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

Finally, it should be noted that the foregoing embodiments are merely intended to describe the technical solutions of this application other than limiting this application. Although this application is described in detail with reference to the foregoing embodiments, persons of ordinary skill in the art should understand that they may still make modifications to the technical solutions recorded in the foregoing embodiments or make equivalent replacements to some technical features thereof, without departing from the protection scope of the technical solutions of embodiments of this application.

## Claims

1. A traffic filtering method, applied to a network edge node that provides a cloud service, wherein the method comprises:
Receiving target traffic, wherein the target traffic comprises at least one of traffic sent by a network side to a user terminal or traffic sent by the user terminal to the network side;
obtaining a filtering rule, wherein the filtering rule comprises a filtering condition and a filtering action, and the filtering rule is used to filter, based on the filtering action, target traffic that meets the filtering condition;
invoking a rule engine to parse and execute the filtering rule, wherein the rule engine is deployed in the network edge node, or the rule engine is deployed in a network edge processing system connected to the network edge node, and the network edge processing system is a network edge processing system that provides a cloud service; and
obtaining filtered target traffic based on an execution result, wherein the filtered target traffic is traffic that meets a filtering requirement corresponding to the filtering rule.

2. The method according to claim 1, wherein an expression of the filtering condition comprises at least one of a logical operation, a relational operation, a bitwise operation, an arithmetic operation, a feature matching operation, an operator precedence, a behavior description, or an object reference.

3. The method according to claim 1 or 2, wherein the filtering action comprises at least one of dropping, rate limiting, traffic limiting, blocklist filtering, trustlist filtering, redirection, or customization.

4. The method according to any one of claims 1 to 3, wherein the filtering rule further comprises a data source, the data source comprises at least one of a data packet or a shared resource, the data packet is used to specify an application scope of the filtering rule, and the shared resource is used to provide data support for the filtering condition or the filtering action.

5. The method according to any one of claims 1 to 4, wherein the filtering rule further comprises a scheduling policy for executing the filtering rule.

6. The method according to any one of claims 1 to 5, wherein obtaining the filtering rule comprises:
analyzing target traffic transmitted by the network edge node, and obtaining the filtering rule based on an analysis result.

7. The method according to any one of claims 1 to 5, wherein obtaining the filtering rule comprises:
receiving the filtering rule issued by a service analysis component, wherein the filtering rule is obtained by the service analysis component by analyzing target traffic transmitted by a network edge node in a network.

8. The method according to claim 7, wherein receiving the filtering rule issued by the service analysis component comprises:
receiving a border gateway protocol BGP update message reflected by a route reflector, wherein the BGP update message comprises network layer reachability information NLRI, the NLRI indicates the filtering rule, and the BGP update message is sent by the service analysis component to the route reflector by invoking a network controller.

9. A traffic filtering method, applied to a service analysis component that provides a cloud service, wherein the method comprises:
analyzing traffic transmitted by a network edge node in a network, and obtaining a filtering rule based on an analysis result, wherein the filtering rule comprises a filtering condition and a filtering action, the filtering rule is used to filter, based on the filtering action, target traffic that meets the filtering condition, the target traffic comprises at least one of traffic sent by a network side to a user terminal or traffic sent by the user terminal to the network side, and the network edge node is a network edge node that provides a cloud service; and
issuing the filtering rule to the network edge node, wherein the filtering rule is used by the network edge node to invoke a rule engine to parse and execute the filtering rule, so as to filter the target traffic, and the rule engine is deployed in the network edge node, or the rule engine is deployed in a network edge processing system connected to the network edge node.

10. The method according to claim 9, wherein an expression of the filtering condition comprises at least one of a logical operation, a relational operation, a bitwise operation, an arithmetic operation, a feature matching operation, an operator precedence, a behavior description, or a reference object.

11. The method according to claim 9 or 10, wherein the filtering action comprises at least one of dropping, rate limiting, traffic limiting, blocklist filtering, trustlist filtering, redirection, or customization.

12. The method according to any one of claims 9 to 11, wherein the filtering rule further comprises a data source, the data source comprises at least one of a data packet or a shared resource, the data packet is used to specify an application scope of the filtering rule, and the shared resource is used to provide data support for the filtering condition or the filtering action.

13. The method according to any one of claims 9 to 12, wherein the filtering rule further comprises a scheduling policy for executing the filtering rule.

14. The method according to any one of claims 9 to 13, wherein issuing the filtering rule to the network edge node comprises:
invoking a network controller to send a border gateway protocol BGP update message to a route reflector, so that the route reflector reflects the BGP update message to the network edge node, wherein the BGP update message comprises network layer reachability information NLRI, and the NLRI indicates the filtering rule.

15. The method according to any one of claims 9 to 14, wherein after issuing the filtering rule to the network edge node, the method further comprises:
obtaining an execution result of executing the filtering rule by the network edge node; and
if the execution result does not meet a filtering requirement corresponding to the filtering rule, adjusting the filtering rule, and issuing an adjusted filtering rule to the network edge node, wherein the adjusted filtering rule is used by the network edge node to invoke the rule engine to parse and execute the adjusted filtering rule.

16. A traffic filtering apparatus, used for a network edge node that provides a cloud service, wherein the apparatus comprises:
a receiving module, configured to receive target traffic, wherein the target traffic comprises at least one of traffic sent by a network side to a user terminal or traffic sent by the user terminal to the network side;
a first obtaining module, configured to obtain a filtering rule, wherein the filtering rule comprises a filtering condition and a filtering action, and the filtering rule is used to filter, based on the filtering action, target traffic that meets the filtering condition;
a filtering module, configured to invoke a rule engine to parse and execute the filtering rule, wherein the rule engine is deployed in the network edge node, or the rule engine is deployed in a network edge processing system connected to the network edge node, and the network edge processing system is a network edge processing system that provides a cloud service; and
a second obtaining module, configured to obtain filtered target traffic based on an execution result, wherein the filtered target traffic is traffic that meets a filtering requirement corresponding to the filtering rule.

17. A traffic filtering apparatus, used for a service analysis component that provides a cloud service, wherein the apparatus comprises:
an obtaining module, configured to: analyze traffic transmitted by a network edge node in a network, and obtain a filtering rule based on an analysis result, wherein the filtering rule comprises a filtering condition and a filtering action, the filtering rule is used to filter, based on the filtering action, target traffic that meets the filtering condition, the target traffic comprises at least one of traffic sent by a network side to a user terminal or traffic sent by the user terminal to the network side, and the network edge node is a network edge node that provides a cloud service; and
a sending module, configured to issue the filtering rule to the network edge node, wherein the filtering rule is used by the network edge node to invoke a rule engine to parse and execute the filtering rule, so as to filter the target traffic, and the rule engine is deployed in the network edge node, or the rule engine is deployed in a network edge processing system connected to the network edge node.

18. A computing device cluster, comprising at least one computing device, wherein each computing device comprises a processor and a memory, and a processor of the at least one computing device is configured to execute instructions stored in a memory of the at least one computing device, to enable the computing device cluster to perform the traffic filtering method according to any one of claims 1 to 8, or enable the computing device cluster to perform the traffic filtering method according to any one of claims 9 to 15.

19. A traffic filtering system, wherein the traffic filtering system comprises a network edge node and a service analysis component, wherein the network edge node is configured to implement the traffic filtering method according to any one of claims 1 to 8, and the service analysis component is configured to implement the traffic filtering method according to any one of claims 9 to 15.

20. A computer-readable storage medium, comprising computer program instructions, wherein when the computer program instructions are executed by a computing device cluster, the computing device cluster performs the traffic filtering method according to any one of claims 1 to 15.

21. A computer program product comprising instructions, wherein when the instructions are run by a computing device cluster, the computing device cluster is enabled to perform the traffic filtering method according to any one of claims 1 to 15.
